# FASCICULE DE BREVET EUROPEEN

(11) **EP 3 660 875 B1**
(45) Date de publication et mention de la délivrance du brevet: **27.01.2021**
(21) Numéro de dépôt: 19207422.7
(22) Date de dépôt: 06.11.2019
(51) Int. Cl.: H01F 38/30, H01F 21/06, H01F 29/10, H01F 3/14, H01F 3/10, H01F 27/40, H01F 38/02

(54) **TRANSFORMATEUR DE COURANT, DISPOSITIF DE PROTECTION ET DISJONCTEUR ELECTRIQUE COMPORTANT UN TEL TRANSFORMATEUR**
STROMTRANSFORMATOR, SCHUTZVORRICHTUNG UND ELEKTRISCHER TRENNSCHALTER, DIE EINEN SOLCHEN TRANSFORMATOR UMFASSEN
CURRENT TRANSFORMER, PROTECTION DEVICE AND ELECTRIC CIRCUIT BREAKER COMPRISING SUCH A TRANSFORMER

(30) Priorité: 29.11.2018 FR 1872079
(43) Date de publication de la demande: 03.06.2020
(73) Titulaire: Schneider Electric Industries SAS, 92500 Rueil-Malmaison (FR)
(72) Inventeur: MAS, Patrick, 38050 Grenoble (FR); SHI, Xiaodong, 38050 Grenoble (FR)
(74) Mandataire: Tripodi, Paul

(56) Documents cités:
- DE-A1- 2 359 756
- FR-A- 1 163 942
- FR-A1- 2 725 320
- FR-A1- 2 999 013

## Description

### DOMAINE TECHNIQUE

L'invention concerne un transformateur de courant comportant :
- un circuit magnétique en matériau magnétique destiné à être placé autour d'un conducteur primaire, et
- un enroulement secondaire enroulé sur une partie dudit circuit magnétique pour fournir un courant secondaire à un circuit de traitement.

L'invention concerne aussi un dispositif de protection et un disjoncteur comportant un tel transformateur de courant.

### ETAT DE LA TECHNIQUE

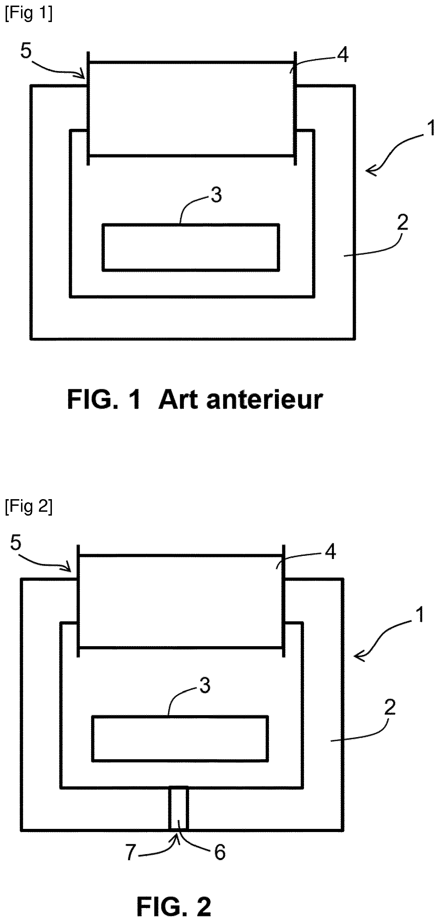

Un transformateur 1 de courant connu est représenté sur la figure 1. Il comporte un circuit magnétique 2 destiné à être placé autour d'un conducteur 3 primaire, et un enroulement 4 secondaire enroulé sur une partie 5 dudit circuit magnétique. Le circuit magnétique est souvent réalisé en tôles empilées. Ces tôles sont composées majoritairement en fer et sont prévues pour fonctionner à des fréquences du réseau électrique, notamment en 50 Hz ou 60 Hz.

Lorsque la fréquence fondamentale du réseau électrique augmente et devient supérieure à 100 Hz ou lorsqu'un courant haute fréquence ou des harmoniques de courant sont superposés au courant de charge circulant dans le conducteur 3 primaire, des pertes d'énergie dans le fer du circuit magnétique sont générées. Ces pertes fer induisent un échauffement du circuit magnétique ainsi que des composants attenants ou en contact avec le circuit magnétique. Ces échauffements sont d'autant sensibles lorsque les transformateurs sont intégrés dans des boitiers isolants avec d'autres composants électriques ou électroniques. L'utilisation de boitiers isolants permet de garantir un isolement électrique entre le conducteur primaire 3 et le reste de l'équipement électrique associé au transformateur de courant

Le document FR 2 999 013 A1 décrit un dispositif magnétothermique de limitation de courant. Le document DE 23 59 756 A1 divulgue un transformateur de courant avec un circuit magnétique ajustable. Le document FR 2 725 320 A1 divulgue un dispositif de déclenchement comportant au moins un transformateur de courant. Le document FR 1 163 942 A divulgue un dispositif inductif ajustable à compensation de température.

### EXPOSE DE L'INVENTION

L'invention a pour but un transformateur de courant capable d'éviter ou réduire des échauffements du circuit magnétique ainsi qu'un dispositif de protection et un disjoncteur comportant un tel transformateur de courant.

Dans un transformateur de courant comportant un circuit magnétique en matériau magnétique destiné à être placé autour d'un conducteur primaire, et un enroulement secondaire enroulé sur une partie dudit circuit magnétique pour fournir un courant secondaire à un circuit de traitement selon l'invention, le circuit magnétique comprend au moins un dispositif de variation de la magnétisation d'une partie dudit circuit magnétique en fonction de la température pour limiter ou réduire le flux magnétique dans le circuit magnétique lorsque la température du circuit magnétique augmente.

De préférence, le dispositif de variation de la magnétisation limite la circulation du flux magnétique à une valeur inférieure à 50% de la valeur à 20°C lorsque la température est supérieure à 150°C.

Avantageusement, le dispositif de variation de la magnétisation crée un entrefer supplémentaire total ou partiel dans le circuit magnétique pour limiter la circulation du flux magnétique lorsque la température devient supérieure à un seuil prédéterminé. De préférence, ledit seuil prédéterminé est compris entre 120°C et 180°C.

Selon un premier mode de réalisation de l'invention préférentiel, le dispositif de variation de la magnétisation comprend un dispositif mécanique logé dans un évidement du circuit magnétique pour produire un entrefer ou augmenter un entrefer par ouverture du circuit magnétique lorsque la température atteint ledit seuil prédéterminé.

Avantageusement, le dispositif mécanique comporte des lames de bimétal montées tête-bêche logé dans un évidement qui agit sur un écartement du circuit magnétique générant un entrefer.

De préférence, le dispositif mécanique comporte un nombre de 6 à 12 lames de bimétal.

Avantageusement, ledit entrefer est supérieur à 0,5 mm lorsque la température est supérieure à 120°C ou le circuit magnétique a un échauffement de 120 K.

Selon un second mode de réalisation de l'invention préférentiel, le dispositif de variation de la magnétisation comprend un dispositif statique logé dans une section dudit circuit magnétique, ledit dispositif statique étant composé d'un matériau magnétique ayant un point de Curie ou température de Curie plus basse que celle du matériau magnétique du circuit magnétique.

De préférence, le matériau du dispositif statique a une température de Curie comprise entre 80°C et 200°C.

Avantageusement, le matériau du dispositif statique est composé majoritairement de fer Nickel ou de ferrite.

De préférence, le matériau du dispositif statique comporte des découpes pour éviter les courants pertes par courants de Foucault.

Un dispositif de protection électronique selon l'invention comportant une unité de traitement électronique connectée à au moins un transformateur de courant et fournissant un signal électronique en réponse à des fonctions de protection comporte un transformateur de courant tel que défini ci-dessus ayant un enroulement secondaire connecté à ladite unité de traitement pour fournir un courant secondaire de mesure ou d'alimentation électrique.

Un disjoncteur électrique selon l'invention comportant au moins un contact électrique principal pour couper un courant dans un circuit électrique, un mécanisme de commande de l'ouverture dudit contact électrique et un dispositif de protection fournissant un signal de commande audit mécanisme de commande comporte au moins un transformateur de courant tel que défini ci-dessus connecté à une unité de traitement dudit dispositif de protection.

### BREVE DESCRIPTION DES DESSINS

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
[Fig 1] - la figure 1 représente un transformateur de courant de l'art antérieur ;
[Fig 2] - la figure 2 représente un transformateur de courant selon un premier mode de réalisation de l'invention ;
[Fig 3] - la figure 3 représente un transformateur de courant selon un second mode de réalisation de l'invention ;
[Fig 4] - la figure 4 représente un transformateur de courant selon un troisième mode de réalisation de l'invention ;
[Fig 5-8] - les figures 5 à 8 représentent des dispositions d'un premier mode de réalisation mécanique d'un dispositif de variation de la magnétisation ;
[Fig 9-12] - les figures 9 à 11 représentent des détails de lames composant le dispositif de variation de la magnétisation selon le premier mode de réalisation ; [Fig 9-12] - la figure 12 représente un second mode de réalisation statique d'un dispositif de variation de la magnétisation ;
[Fig 13] - la figure 13 montre une courbe de magnétisation d'un dispositif de variation de la magnétisation en fonction de la température ;
[Fig 14-15] - les figures 14 et 15 représentent des dispositions d'un second mode de réalisation d'un dispositif de variation de la magnétisation statique ; et
[Fig 16] - la figure 16 représente un schéma bloc d'un disjoncteur et d'un dispositif de protection comportant un transformateur selon un mode de réalisation de l'invention.

### DESCRIPTION DETAILLEE DE MODES DE REALISATION

La figure 1 représente un transformateur 1 de courant comportant un circuit magnétique 2 en matériau magnétique destiné à être placé autour d'un conducteur primaire 3, et un enroulement secondaire 4 enroulé sur une partie 5 du circuit magnétique 2 pour fournir un courant secondaire à des circuits de traitement. Le circuit magnétique comporte des tôles composées majoritairement en fer est sont prévues pour fonctionner à des fréquences du réseau électrique notamment en 50 Hz ou 60 Hz.

Pour éviter un échauffement du circuit magnétique lorsque des pertes d'énergie dans le fer du circuit magnétique augmentent, le circuit magnétique comprend au moins un dispositif 6 de variation de la magnétisation d'une partie 7 dudit circuit magnétique pour limiter ou réduire le flux magnétique dans le circuit magnétique lorsque la température du circuit magnétique augmente. La figure 2 représente un transformateur de courant selon un mode de réalisation de l'invention avec un dispositif 6 intercalé dans une section 7 du circuit magnétique.

Les pertes d'énergie dans le fer du circuit magnétique augmentent notamment lorsque la fréquence fondamentale du réseau électrique augmente et devient supérieure à 100 Hz ou lorsqu'un courant haute fréquence ou des harmoniques de courant sont superposés au courant de charge circulant dans le conducteur 3 primaire.

Par exemple, le dispositif de variation de la magnétisation limite la circulation du flux magnétique à une valeur inférieure à 50% de la valeur à 20°C lorsque la température est supérieure à 150°C. Dans un mode de réalisation préférentiel, le dispositif de variation de la magnétisation crée un entrefer supplémentaire total ou partiel dans le circuit magnétique pour limiter la circulation du flux magnétique lorsque la température devient supérieure à un seuil prédéterminé. Ainsi, le dispositif 6 est un limiteur de flux magnétique en fonction de la température. L'avantage d'un tel dispositif est de ne pas créer d'entrefer supplémentaire à bas niveau de courant pour lequel il est nécessaire d'avoir un bon transfert d'énergie vers l'enroulement secondaire. De plus, à bas niveau de courant l'échauffement reste faible.

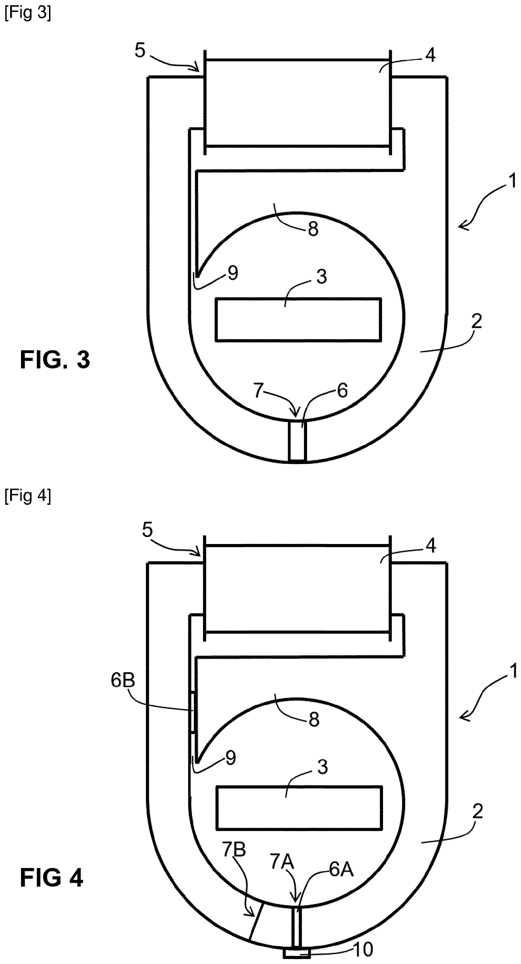

La figure 3 représente un transformateur de courant selon un autre mode de réalisation de l'invention. Le circuit magnétique a une forme en partie arrondie et comporte un shunt magnétique 8 à entrefer 9. Le shunt 8 détourne un flux magnétique lorsque la magnétisation du circuit magnétique dépasse un niveau prédéterminé de manière à réduire le flux dans la partie 5 du circuit magnétique recevant l'enroulement secondaire 4. Le shunt 8 a pour fonction de limiter le courant secondaire de l'enroulement 4 lorsque le courant dans le conducteur primaire augmente. Dans le mode de réalisation de la figure 3, le shunt 8 est réalisé dans les mêmes tôles que le circuit magnétique 2. Cependant, d'autres modes de réalisation sont possibles. Par exemple, des shunts peuvent être rapportés sur le circuit magnétique et réalisés dans un matériau différent, notamment en poudre de fer pour une meilleure régulation du courant dans l'enroulement secondaire.

Un autre mode de réalisation d'un transformateur de courant selon l'invention est représenté sur la figure 4. Un dispositif 6A de variation de la magnétisation d'une partie 7A dudit circuit magnétique est maintenu par un dispositif de maintien 10 du circuit magnétique. Si le dispositif 6A est mécanique, le dispositif 10 de maintien est aussi utilisé pour assurer le rappel en position normale. Un dispositif 6B de variation de la magnétisation d'une partie 7B dudit circuit magnétique peut aussi être disposé dans l'entrefer 9 du shunt 8. Dans ce cas, si le dispositif 6B est un dispositif mécanique et si une ouverture est placée sur la partie 7B du circuit magnétique éloignée du dispositif 6B, alors une ouverture de plus grande amplitude est possible sur la partie 7B pour réduire la magnétisation du circuit magnétique 2.

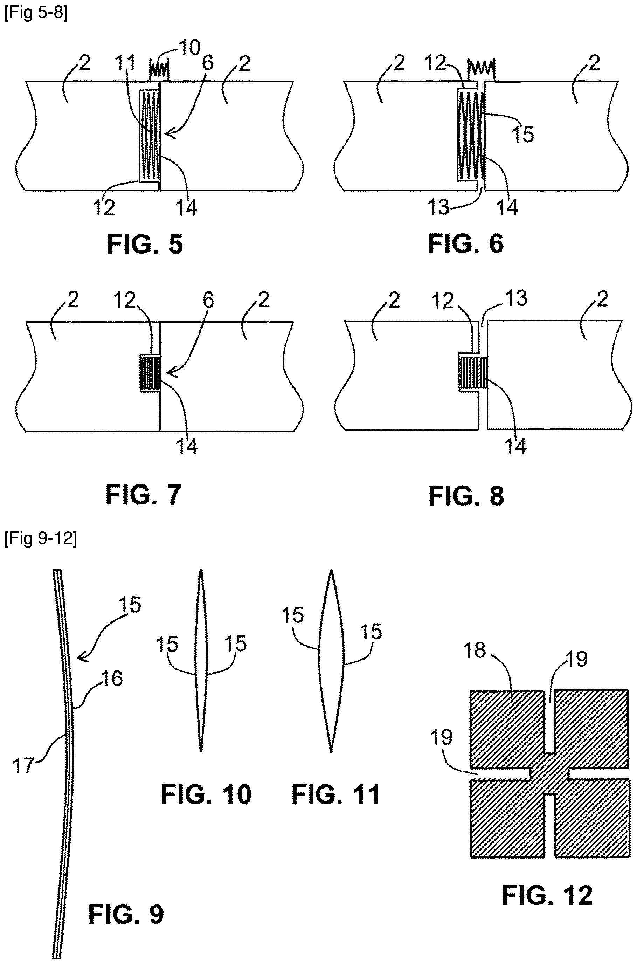

Selon un premier mode de réalisation du dispositif limiteur de flux magnétique en fonction de la température représenté sur les figures 5 à 8, le dispositif 6 de variation de la magnétisation comprend un dispositif mécanique 11 logé dans un évidement 12 du circuit magnétique 2 pour produire un entrefer 13 ou augmenter un entrefer par ouverture du circuit magnétique 2 lorsque la température atteint ledit seuil prédéterminé. De préférence, ledit seuil prédéterminé est compris entre 120°C et 180°C.

Le dispositif mécanique 11 crée un entrefer supplémentaire qui va augmenter à partir d'un seuil de température. Pour cela, Le dispositif mécanique 11 comporte des lames 14 de bimétal montées tête-bêche et logées dans l'évidement 12 pour agir sur un écartement du circuit magnétique générant un entrefer 13. L'évidement 12 permet de contenir les bilames en position de manière à produire une poussée perpendiculairement à leur déformation sous l'action de la température. Un dispositif de maintien 10 du circuit magnétique comporte un ressort de rappel pour assurer une bonne fermeture du circuit magnétique ou la re-fermeture et éviter le bruit.

Ainsi, La déflexion des bilames écarte les bords de l'entrefer à partir d'une température fixée. Dans ce cas, On travaille le circuit magnétique en élasticité mécanique donc le fonctionnement est réversible. Un écartement ou un entrefer de 0,5 mm est suffisant pour réduire significativement les pertes fer de -50% et de réduire ou limiter ainsi l'échauffement du circuit magnétique. Un tel écartement du circuit magnétique a peu d'impact sur le courant secondaire lorsque le courant primaire est à un courant nominal de fonctionnement. Avantageusement, ledit entrefer est supérieur à 0,5 mm lorsque la température est supérieure à 120°C.

De préférence, le dispositif mécanique comporte un nombre de 6 à 12 lames de bimétal. Sur les figures 5 à 8 le mode de réalisation du dispositif limiteur mécanique comporte 8 lames de matériau bimétal montées tête-bêche.

L'emplacement de l'évidement est de préférence dans le circuit magnétique avec séparation d'une section découpée comme sur les figures. Cependant l'évidement peux aussi être disposé sur un bord ou à l'extérieur du circuit magnétique ou sur un support provoquant la séparation par entrefer.

Les figures 9 à 11 représentent des détails de lames composant le dispositif de variation de la magnétisation selon le premier mode de réalisation. Un exemple de lame bimétal est représentée sur la figure 9, une première face 16 de la lame est constituée d'un premier matériau ayant un premier coefficient de dilatation et une seconde face 17 est constituée d'un second matériau ayant un second coefficient de dilatation inférieur au premier coefficient de dilatation. La figure 9 montre deux lames 15 montées en tête-bêche ou face à face à basse température par exemple 20°C et la figure 11 montre les mêmes lames en haute température de l'ordre 130 °C. La déformation des lames est destinée à pousser les parois d'une section du circuit magnétique pour créer un entrefer à haute température. Dans un exemple de réalisation, la taille de chaque lame à une longueur 8,5 mm, une largeur 3 mm et épaisseur 0,6 mm. Ainsi, le déplacement ou longueur est supérieur à 0,5 mm lorsque la température est supérieure à 120°C ou le circuit magnétique a un échauffement de 120 K. Pour un ensemble de 8 lames, le déplacement est de 0,6 mm. Le déplacement avec 10 lames sera de l'ordre de 0,74 mm. Le matériau bilame sera choisi de préférence avec une déformation de linéaire de -20 °C à 200°C. Ce déplacement est une valeur théorique qui ne tient pas compte de la pression du ressort de rappel du dispositif de maintien 10. Dans la réalité, les déplacements peuvent un peu moins longs en fonction des ressorts.

Afin d'éviter des mouvements mécaniques du circuit magnétique, dans un second mode de réalisation du dispositif limiteur de flux magnétique en fonction de la température, le dispositif de variation de la magnétisation comprend un dispositif statique 18 logé dans une section dudit circuit magnétique. Selon ce second mode de réalisation de l'invention, le dispositif statique 18 est composé d'un matériau magnétique ayant un point de Curie ou température de Curie plus basse que celle du matériau du circuit magnétique. Le matériau du dispositif statique 18 a de préférence une température de Curie comprise entre 80°C et 200°C, par exemple autour de 130°C. Avantageusement, le matériau du dispositif statique est composé majoritairement de Fer-Nickel (FeNi) ou de ferrite. Un autre exemple de ce type de matériaux est le "Phytherm de la société Aperam".

Ainsi pour limiter la température du circuit magnétique, ledit circuit magnétique comporte une découpe pouvant générer un entrefer. Dans cette découpe ou ouverture, un élément en matériau magnétique à bas point de Curie (Tc) est inséré. L'aimantation de ce matériau décroit en fonction de la température jusqu'à s'annuler pour la température Tc. Dans la plage de températures ne présentant pas de risques pour le capteur par exemple inférieures à 120 °C, le matériau a des propriétés magnétiques permettant un fonctionnement normal du capteur, en laissant passer librement le flux magnétique à travers l'ouverture. Dans ce cas, la puissance fournie par le capteur aux bas niveaux de courants est peu affectée. A l'approche de la température limite définie, le matériau perd suffisamment son aimantation pour se comporter comme de l'air. Les pertes fer et l'échauffement sont alors réduits comme dans la première solution avec bilames.

La figure 12 représente un mode de réalisation d'un dispositif statique de variation de la magnétisation 18 comportant des découpes 19 pour éviter des pertes par courant de Foucault. Lorsque le matériau est de la ferrite des découpes ne sont pas nécessaires puisque le ce matériau n'est pas un bon conducteur ou isolant électrique.

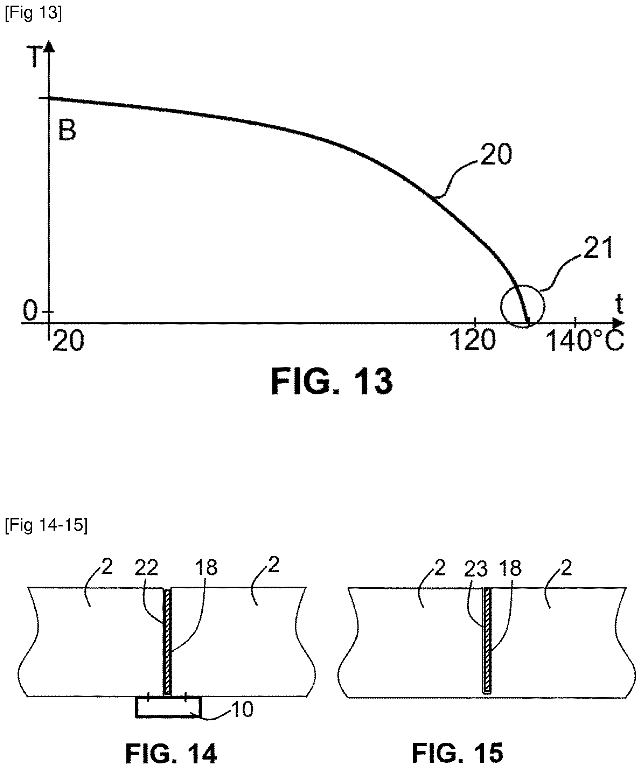

La figure 13 montre une courbe 20 de magnétisation d'un dispositif de variation de la magnétisation en fonction de la température. Autour de 20 °C la magnétisation est encore maximale. Puis, lorsque la température augmente la magnétisation du matériau diminue jusqu'à devenir quasiment nulle au dépassement du point de Curie 21.

Les figures 14 et 15 représentent des dispositions selon le second mode de réalisation d'un dispositif de variation de la magnétisation statique 18 pour limiter le flux magnétique en fonction de la température. Le circuit magnétique comporte des entailles ou des ouvertures pour créer des entrefers à des températures élevées. Sur la figure 14 l'entrefer sera complet puisqu'une ouverture 22 prend toute la section. Dans ce cas, un dispositif 10 de maintien empêche de déplacement du circuit magnétique. Sur la figure 15, l'entrefer est partiel avec une entaille 23 ne prenant qu'une partie de la section du circuit magnétique. Ainsi, un élément 18 en matériau magnétique à bas point de Curie (Tc) est inséré dans les entailles ou ouvertures 22 ou 23. De préférence, la distance de l'entrefer des ouvertures 22 ou 23 est comprise entre 0,5 et 1 mm.

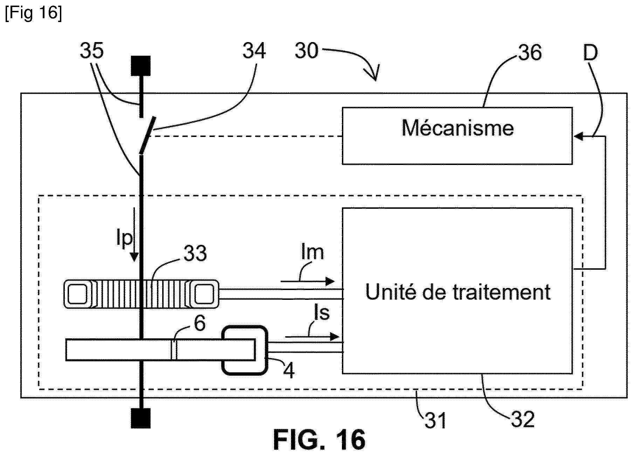

La figure 16 représente un schéma bloc d'un disjoncteur 30 et d'un dispositif 31 de protection comportant un transformateur 1 selon un mode de réalisation de l'invention.

Le dispositif de protection électronique 31 comporte une unité de traitement 32 électronique connectée à au moins un transformateur de courant et fournissant un signal électronique D en réponse à des fonctions de protection. Le dispositif de protection comporte un transformateur de courant 1 selon un mode de réalisation de l'invention a variation de magnétisation. Le transformateur 1 a un enroulement secondaire 4 connecté à l'unité de traitement 32 pour fournir un courant secondaire Is de mesure ou d'alimentation électrique. Dans le cas particulier de la figure 16, le dispositif de protection comporte un transformateur de courant 1 avec un dispositif de variation de la magnétisation en fonction de la température pour l'alimentation de l'unité de traitement 32 et un capteur de courant 33 pour fournir un signal de mesure de courant Im à l'unité de traitement.

Le disjoncteur électrique 30 comporte au moins un contact principal 34 pour couper un courant Ip dans un circuit électrique 35, un mécanisme 36 de commande de l'ouverture dudit contact électrique 34 et un dispositif de protection 31 fournissant un signal de commande D audit mécanisme de commande 36. Ce disjoncteur comporte au moins un transformateur de courant 1 avec un dispositif de variation de la magnétisation en fonction de la température pour l'alimentation de l'unité de traitement 32 du dispositif de protection 31. Le conducteur primaire 3, faisant partie du circuit électrique 35, traverse l'intérieur du circuit magnétique 2 du transformateur de courant 1.

## Revendications

1. Transformateur (1) de courant comportant :
- un circuit magnétique (2) en matériau magnétique destiné à être placé autour d'un conducteur primaire (3), et
- un enroulement secondaire (4) enroulé sur une partie (5) dudit circuit magnétique (2) pour fournir un courant secondaire à un circuit de traitement (32),
**caractérisé en ce que** le circuit magnétique (2) comprend au moins un dispositif (6, 6A, 6B) de variation de la magnétisation d'une partie (7) dudit circuit magnétique en fonction de la température pour limiter ou réduire le flux magnétique dans le circuit magnétique lorsque la température du circuit magnétique augmente.

2. Transformateur de courant selon la revendication 1 **caractérisé en ce que** le dispositif (6, 6A, 6B) de variation de la magnétisation limite la circulation du flux magnétique à une valeur inférieure à 50% de la valeur à 20°C lorsque la température est supérieure à 150°C.

3. Transformateur de courant selon l'une des revendications 1 ou 2 **caractérisé en ce que** le dispositif (6, 6A, 6B) de variation de la magnétisation crée un entrefer supplémentaire total ou partiel dans le circuit magnétique pour limiter la circulation du flux magnétique lorsque la température devient supérieure à un seuil prédéterminé.

4. Transformateur de courant selon la revendication 3 **caractérisé en ce que** ledit seuil prédéterminé est compris entre 120°C et 180°C.

5. Transformateur de courant selon l'une quelconque des revendications 1 à 4 **caractérisé en ce que** le dispositif (6, 6A, 6B) de variation de la magnétisation comprend un dispositif mécanique (11, 14) logé dans un évidement (12) du circuit magnétique (2) pour produire un entrefer (13) ou augmenter un entrefer (13) par ouverture du circuit magnétique (2) lorsque la température atteint ledit seuil prédéterminé.

6. Transformateur de courant selon la revendication 5 **caractérisé en ce que** le dispositif mécanique (11, 14) comporte des lames (15) de bimétal montées tête-bêche logé dans un évidement (12) qui agit sur un écartement du circuit magnétique générant un entrefer.

7. Transformateur de courant selon la revendication 6 **caractérisé en ce que** le dispositif mécanique (11, 14) comporte un nombre de 6 à 12 lames (15) de bimétal (16, 17).

8. Transformateur de courant selon l'une des revendications 6 ou 7 caractérisé en ce ledit entrefer (13) est supérieur à 0,5 mm lorsque la température est supérieure à 120°C ou le circuit magnétique a un échauffement de 120 K.

9. Transformateur de courant selon l'une quelconque des revendications 1 à 4 **caractérisé en ce que** le dispositif (6, 6A, 6B) de variation de la magnétisation comprend un dispositif statique (18) logé dans une section dudit circuit magnétique (2), ledit dispositif statique étant composé d'un matériau magnétique ayant un point de Curie ou température de Curie plus basse que celle du matériau magnétique du circuit magnétique (2).

10. Transformateur de courant selon la revendication 9 **caractérisé en ce que** le matériau du dispositif statique (18) a une température de Curie comprise entre 80°C et 200°C.

11. Transformateur de courant selon l'une des revendications 9 ou 10 **caractérisé en ce que** le matériau du dispositif statique (18) est composé majoritairement de fer Nickel (FeNi) ou de ferrite.

12. Transformateur de courant selon l'une quelconque des revendications 9 à 11 **caractérisé en ce que** le matériau du dispositif statique (18) comporte des découpes (19) pour éviter les courants pertes par courants de Foucault.

13. Dispositif de protection électronique (31) comportant une unité de traitement (32) électronique connectée à au moins un transformateur de courant (1) et fournissant un signal électronique (D) en réponse à des fonctions de protection, dispositif **caractérisé en ce qu'**il comporte un transformateur de courant (1) selon l'une des revendications 1 à 12 ayant un enroulement secondaire (4) connecté à ladite unité de traitement (32) pour fournir un courant secondaire de mesure ou d'alimentation électrique (Is).

14. Disjoncteur électrique (30) comportant au moins un contact électrique principal (34) pour couper un courant (Ip) dans un circuit électrique (35), un mécanisme de commande (36) de l'ouverture dudit contact électrique (34) et un dispositif de protection (31) fournissant un signal de commande (D) audit mécanisme de commande (36) **caractérisée en ce qu'**il comporte au moins un transformateur de courant (1) selon l'une quelconque des revendications 1 à 12 connecté à une unité de traitement (32) dudit dispositif de protection (31).

## Patentansprüche

1. Stromwandler (1), der aufweist:
- einen Magnetkreis (2) aus magnetischem Material, der dazu bestimmt ist, um einen Primärleiter (3) herum angeordnet zu werden, und
- eine Sekundärwicklung (4), die auf einen Teil (5) des Magnetkreises (2) gewickelt wird, um einen Sekundärstrom an einen Verarbeitungsschaltkreis (32) zu liefern,
**dadurch gekennzeichnet, dass** der Magnetkreis (2) mindestens eine Vorrichtung (6, 6A, 6B) zur Änderung der Magnetisierung eines Teils (7) des Magnetkreises abhängig von der Temperatur enthält, um den Magnetfluss im Magnetkreis zu begrenzen oder zu verringern, wenn die Temperatur des Magnetkreises zunimmt.

2. Stromwandler nach Anspruch 1, **dadurch gekennzeichnet, dass** die Vorrichtung (6, 6A, 6B) zur Änderung der Magnetisierung die Zirkulation des Magnetflusses auf einen Wert von weniger als 50% des Werts bei 20°C begrenzt, wenn die Temperatur höher ist als 150°C.

3. Stromwandler nach einem der Ansprüche 1 oder 2, **dadurch gekennzeichnet, dass** die Vorrichtung (6, 6A, 6B) zur Änderung der Magnetisierung einen vollständigen oder teilweisen zusätzlichen Luftspalt im Magnetkreis erzeugt, um die Zirkulation des Magnetflusses zu begrenzen, wenn die Temperatur höher wird als eine vorbestimmte Schwelle.

4. Stromwandler nach Anspruch 3, **dadurch gekennzeichnet, dass** die vorbestimmte Schwelle zwischen 120°C und 180°C liegt.

5. Stromwandler nach einem der Ansprüche 1 bis 4, **dadurch gekennzeichnet, dass** die Vorrichtung (6, 6A, 6B) zur Änderung der Magnetisierung eine mechanische Vorrichtung (11, 14) enthält, die in einer Aussparung (12) des Magnetkreises (2) untergebracht ist, um einen Luftspalt (13) zu erzeugen oder einen Luftspalt (13) durch Öffnen des Magnetkreises (2) zu vergrößern, wenn die Temperatur die vorbestimmte Schwelle erreicht.

6. Stromwandler nach Anspruch 5, **dadurch gekennzeichnet, dass** die mechanische Vorrichtung (11, 14) Kopf bei Fuß montierte Bimetall-Lamellen (15) aufweist, die in einer Aussparung (12) untergebracht sind, die auf einen Abstand des Magnetkreises einwirkt, der einen Luftspalt erzeugt.

7. Stromwandler nach Anspruch 6, **dadurch gekennzeichnet, dass** die mechanische Vorrichtung (11, 14) eine Anzahl von 6 bis 12 Lamellen (15) aus Bimetall (16, 17) aufweist.

8. Stromwandler nach einem der Ansprüche 6 oder 7, **dadurch gekennzeichnet, dass** der Luftspalt (13) größer als 0,5 mm ist, wenn die Temperatur höher als 120°C ist oder der Magnetkreis eine Erwärmung von 120 K hat.

9. Stromwandler nach einem der Ansprüche 1 bis 4, **dadurch gekennzeichnet, dass** die Vorrichtung (6, 6A, 6B) zur Änderung der Magnetisierung eine statische Vorrichtung (18) enthält, die in einem Abschnitt des Magnetkreises (2) untergebracht ist, wobei die statische Vorrichtung aus einem magnetischen Material besteht, das einen Curie-Punkt oder eine Curie-Temperatur niedriger als diejenige des magnetischen Materials des Magnetkreises (2) hat.

10. Stromwandler nach Anspruch 9, **dadurch gekennzeichnet, dass** das Material der statischen Vorrichtung (18) eine Curie-Temperatur zwischen 80°C und 200°C hat.

11. Stromwandler nach einem der Ansprüche 9 oder 10, **dadurch gekennzeichnet, dass** das Material der statischen Vorrichtung (18) mehrheitlich aus Nickel-Eisen (FeNi) oder Ferrit besteht.

12. Stromwandler nach einem der Ansprüche 9 bis 11, **dadurch gekennzeichnet, dass** das Material der statischen Vorrichtung (18) Ausschnitte (19) aufweist, um die Verlustströme durch Wirbelströme zu vermeiden.

13. Elektronische Schutzvorrichtung (31), die eine elektronische Verarbeitungseinheit (32) aufweist, die mit mindestens einem Stromwandler (1) verbunden ist und ein elektronisches Signal (D) als Antwort auf Schutzfunktionen liefert,
wobei die Vorrichtung **dadurch gekennzeichnet ist, dass** sie einen Stromwandler (1) nach einem der Ansprüche 1 bis 12 aufweist, der eine Sekundärwicklung (4) hat, die mit der Verarbeitungseinheit (32) verbunden ist, um einen Sekundärstrom zur Messung oder Stromversorgung (Is) zu liefern.

14. Elektrischer Schutzschalter (30), der mindestens einen elektrischen Hauptkontakt (34), um einen Strom (Ip) in einem elektrischen Schaltkreis (35) zu unterbrechen, einen Steuermechanismus (36) der Öffnung des elektrischen Kontakts (34) und eine Schutzvorrichtung (31) aufweist, die ein Steuersignal (D) an den Steuermechanismus (36) liefert, **dadurch gekennzeichnet, dass** er mindestens einen Stromwandler (1) nach einem der Ansprüche 1 bis 12 aufweist, der mit einer Verarbeitungseinheit (32) der Schutzvorrichtung (31) verbunden ist.

## Claims

1. Current transformer (1) comprising:
- a magnetic circuit (2) made from magnetic material, intended to be placed around a primary conductor (3), and
- a secondary winding (4) wound on a part (5) of said magnetic circuit (2) in order to deliver a secondary current to a processing circuit (32),
**characterized in that** the magnetic circuit (2) comprises at least one device (6, 6A, 6B) for varying the magnetization of a portion (7) of said magnetic circuit depending on the temperature in order to limit or reduce the magnetic flux in the magnetic circuit when the temperature of the magnetic circuit increases.

2. Current transformer according to Claim 1, **characterized in that** the device (6, 6A, 6B) for varying the magnetization limits the flow of the magnetic flux to a value smaller than 50% of the value at 20°C when the temperature is greater than 150°C.

3. Current transformer according to either of Claims 1 and 2, **characterized in that** the device (6, 6A, 6B) for varying the magnetization creates an additional total or partial gap in the magnetic circuit in order to limit the flow of the magnetic flux when the temperature becomes greater than a predefined threshold.

4. Current transformer according to Claim 3, **characterized in that** said predefined threshold is between 120°C and 180°C.

5. Current transformer according to any one of Claims 1 to 4, **characterized in that** the device (6, 6A, 6B) for varying the magnetization comprises a mechanical device (11, 14) housed in a recess (12) of the magnetic circuit (2) in order to produce a gap (13) or to increase a gap (13) by opening the magnetic circuit (2) when the temperature reaches said predefined threshold.

6. Current transformer according to Claim 5, **characterized in that** the mechanical device (11, 14) includes bimetal strips (15) mounted head-to-tail and is housed in a recess (12) which acts on a separation of the magnetic circuit generating a gap.

7. Current transformer according to Claim 6, **characterized in that** the mechanical device (11, 14) includes 6 to 12 bimetal (16, 17) strips (15).

8. Current transformer according to either of Claims 6 and 7, **characterized in that** said gap (13) is greater than 0.5 mm when the temperature is greater than 120°C or the magnetic circuit has a temperature rise of 120 K.

9. Current transformer according to any one of Claims 1 to 4, **characterized in that** the device (6, 6A, 6B) for varying the magnetization comprises a static device (18) housed in a section of said magnetic circuit (2), said static device being composed of a magnetic material having a Curie point or Curie temperature lower than that of the magnetic material of the magnetic circuit (2).

10. Current transformer according to Claim 9, **characterized in that** the material of the static device (18) has a Curie temperature between 80°C and 200°C.

11. Current transformer according to either of Claims 9 and 10, **characterized in that** the material of the static device (18) is predominantly composed of iron nickel (FeNi) or of ferrite.

12. Current transformer according to any one of Claims 9 to 11, **characterized in that** the material of the static device (18) includes cutouts (19) in order to avoid current losses through eddy currents.

13. Electronic protection device (31) including an electronic processing unit (32) connected to at least one current transformer (1) and delivering an electronic signal (D) in response to protection functions,
which device is **characterized in that** it includes a current transformer (1) according to one of Claims 1 to 12 having a secondary winding (4) connected to said processing unit (32) in order to deliver a secondary measurement or electric power supply current (Is).

14. Electric circuit breaker (30) including at least one main electric contact (34) for interrupting a current (Ip) in an electric circuit (35), a mechanism (36) for controlling the opening of said electric contact (34) and a protection device (31) delivering a control signal (D) to said control mechanism (36), **characterized in that** it includes at least one current transformer (1) according to any one of Claims 1 to 12 connected to a processing unit (32) of said protection device (31).
